# EUROPEAN PATENT SPECIFICATION

(11) **EP 2 060 432 B1**
(45) Date of publication and mention of the grant of the patent: **27.10.2010**
(21) Application number: 07425723.9
(22) Date of filing: 14.11.2007
(51) Int. Cl.: B60K 37/02, G01D 11/28, G01D 13/28

(54) **On-board instrument indicator device**
Bordinstrumentanzeigervorrichtung
Dispositif d'indicateur d'instrument embarqué

(43) Date of publication of application: 20.05.2009
(73) Proprietor: Magneti Marelli S.p.A., Corbetta (MI) (IT)
(72) Inventor: Ceruti, Osvaldo, 20011 Corbetta (IT); Mouard, Sylvain, 20011 Corbetta (IT)
(74) Representative: Jorio, Paolo

(56) References cited:
- DE-A1- 3 425 029
- DE-A1- 3 435 377
- DE-A1-102005 038 626
- FR-A- 2 734 901
- US-A1- 2005 012 607
- US-B1- 6 189 480

## Description

The present invention relates to an on-board instrument indicator device.

Specifically, the present invention relates to an indicator device of the type comprising a hand having a determined thickness and a pin supporting the hand and turnable about an axis; the hand being provided with reflecting prisms for directing a differently oriented light beam along the hand; and a cup-shaped lid for covering the prisms; the lid having a side wall and a bottom wall and being provided with a slot engaged by a portion of the hand carrying said prisms.

In the known indicator devices of the above-described type, the connection of the lid to the hand normally requires the use of separate assembly elements, which make the structure of the indicator device relatively complex and which complicate the assembly procedures thereof.

DE 34 25 029 A1 discloses an illuminating device in a measuring instrument according to the preamble of claim 1. The illuminating device includes a pointer of essentially elongated shape and transparent. In an intermediate part of the pointer, a light-receiving section is provided which extends vertically with respect to the pointer and forms the shape of a T with the latter. The pointer has a flat top and an underside which extends to both sides of the light-receiving section. A reflecting material is attached to the undersides. Underneath the top and over the level of the undersides, transversely extending hollow spaces open towards the side are formed. They are limited by reflecting areas.

DE 34 35 377 A1 discloses a display system for measuring instruments. The display system has a pointer and a measuring arrangement on each side of a digit plate. The pointer is fixed to a support which is coupled via a spindle through a hole in the digit plate to the measuring arrangement. The pointer is fixed to the support in the correct position and the support is led through the hole in the digit plate. The radial extent of the support is roughly the size of the hole. The pointer is fixed to the support by a ratchet or snap-action device. Several pointers with several measuring arrangements may occupy the same digit plate. The pointer may pivot on the support or may be secured by a cap.

It is the object of the present invention to provide an indicator device of the above-described type, which is simple and cost-effective to make and which is free from the above-mentioned drawbacks.

According to the present invention, an indicator device as claimed in claim 1 and preferably in any one of the claims either directly or indirectly depending on claim 1 is provided.

The present invention will now be described with reference to the accompanying drawings, which illustrate some non-limitative embodiments thereof, in which:
- figure 1 is a diagrammatic view of an on-board instrument provided with a preferred embodiment of the indicator device according to the present invention;
- figure 2 shows a side elevation view on enlarged scale of the indicator device in figure 1;
- figure 3 is a plan view of the indicator device in figure 2;

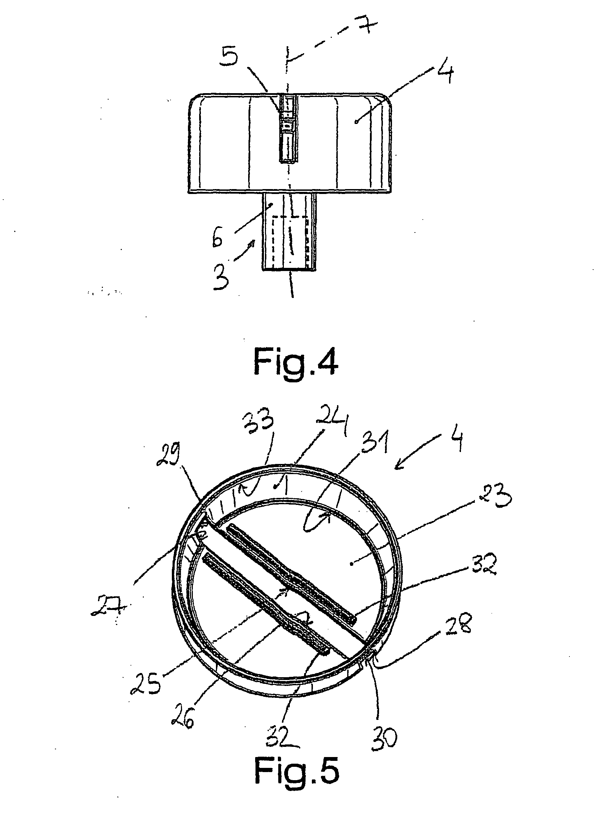

- figure 4 is a first end view of the indicator device in figures 2 and 3;
- figure 5 is a perspective bottom view of a detail in figures from 2 to 4;
- figure 6 is a section taken along the line VI-VI in figure 3;

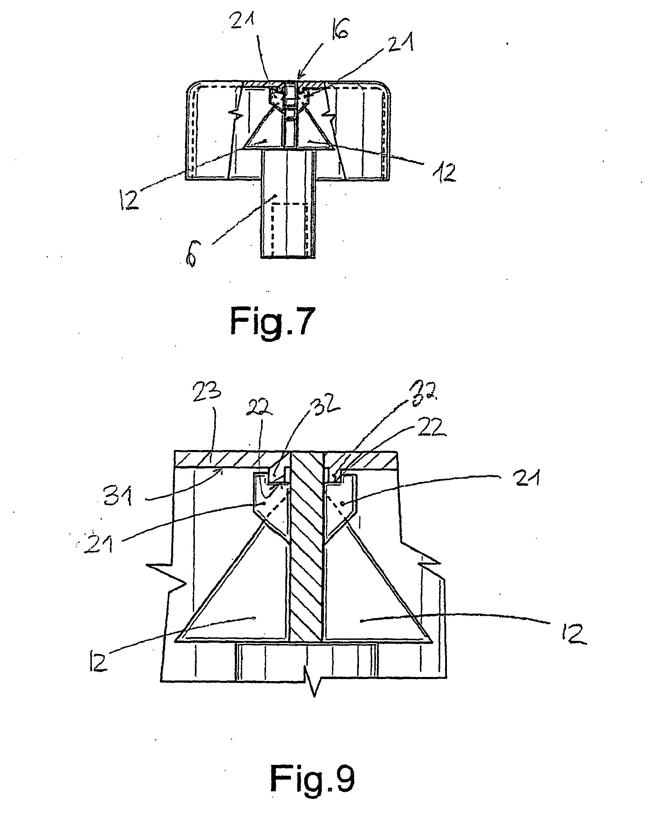

- figure 7 is a second end view, with sectional parts, of the indicator device in figures 2 and 3;
- figure 8 shows a detail of figure 6 on enlarged scale;
- figure 9 shows a detail of figure 7 on enlarged scale; and
- figures 10 and 11 relate to a further embodiment of the indicator device according to the present invention.

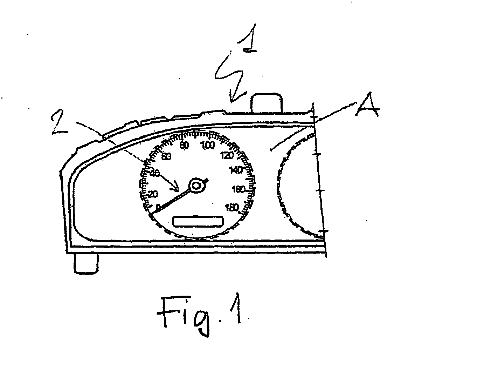

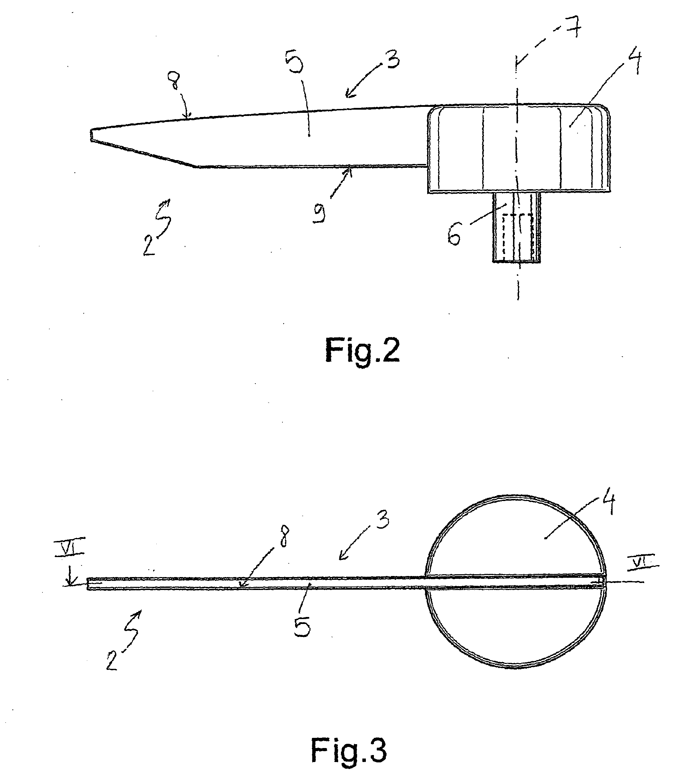

In figure 1, numeral 1 indicates as a whole an on-board instrument comprising an indicator device 2, which comprises a pointer 3 and a lid 4, as shown in figures 2, 3, 6 and 10.

The pointer 3 comprises in turn a hand 5 and a pin 6, which supports the hand 5 and is mounted through a panel A of the instrument 1 to rotate, with respect to the panel A and under the control of an instrument (not shown), about a rotation axis 7 transversal to the panel A and to the hand 5.

As shown in figures from 6 to 9, the hand 5 is in the form of a flat plate laterally delimited by two essentially rectilinear edges, indicated by numerals 8 and 9 respectively, which are perpendicular to the rotation axis 7 which identifies, on the hand 5, two portions 10 and 11 arranged on opposite sides of the rotation axis 7 itself, the portion 10 defining the hand itself, while the portion 11 being a shorter portion.

The hand 5 is provided with reflecting prisms 12, in this case two reflecting prisms 12, which direct a differently oriented light beam (not shown) along the hand 5. In general, this light beam is output by the mentioned instrument (not shown) along the axis 7 and is conveyed onto the prisms 12 by the pin 6 which, for this purpose, is normally formed by transparent material. In the example shown, each prism 12 has a reflecting surface 13 which deviates the light beam by 90° with respect to its original orientation. The prisms 12 are arranged on opposite sides of the rotation axis 7 and delimit an essentially triangular cavity 14 made in the hand 5 astride the rotation axis 7.

The hand 5 is provided with a centring device 15, which cooperates with the lid 4 to hold the lid 4 itself in a position coaxial to the rotation axis 7, and with a resting device 16 cooperating with the lid 4 to support the lid 4 itself on the pointer 3 in the mentioned position coaxial to the rotation axis 7.

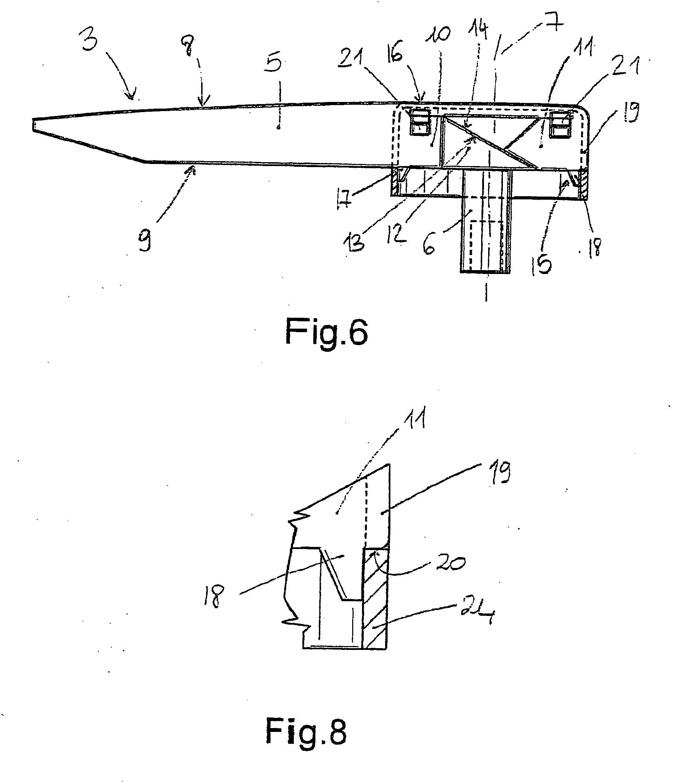

As shown better in detail in figure 6, the centring device 15 comprises two appendixes 17 and 18, which extend from the edge 9 of the hand 5 in a direction essentially parallel to the rotation axis 7 and are arranged in specular positions with respect to the rotation axis 7 itself and at a predetermined distance from each other. Specifically, the appendix 18 extends from portion 11, is arranged near the free end of the portion 11 and identifies thereon an end segment 19 arranged outside the appendix 18 and joined to the appendix 18 by means of a shoulder 20.

As shown better in detail in figure 6, the resting device 16 comprises two pairs of wings or shelves 21, wherein the wings 21 of each pair are symmetrically arranged with respect to the rotation axis 7, extend from a corresponding side surface of the hand 5 in a direction transversal to the rotation axis 7, are arranged at a determined distance from the edge 8, equal for all wings 21, and each presents a corresponding notch 22 parallel to the edge 8.

As shown in figures from 2 to 5, the lid 4, which is formed by an elastically deformable material, is cup-shaped, comprises an essentially flat bottom wall 23 and has a thickness essentially equal to the distance existing between each wing 21 and the edge 8, and an essentially cylindrical side wall 24, which has an internal diameter rounding up the distance existing between the external surfaces of the appendixes 17 and 18, and a thickness essentially equal to the length of the shoulder 20.

Through the lid 4 a diametric slot 25 is obtained, which has a width rounding up the thickness of the hand 5, measured transversally to the rotation axis 7, and comprises a central portion 26, which is obtained through the bottom wall 23, and two side portions, indicated by numerals 27 and 28 respectively, which are obtained in the side wall 24, are respectively engaged by the portion 10 and by the portion 11 of the hand 5 and have corresponding length essentially equal to the distance existing between the edges 8 and 9. The two side portions 27 and 28 have two corresponding ends, indicated by numerals 29 and 30, and communicate with corresponding ends of the central portion 26. An internal surface 31 of the bottom wall 23 of the lid 4 is provided with two ribs 32 protruding inwards from the bottom wall 23 itself, arranged on opposite sides of the central portion 26 of the slot 25 and engaged inside the notches 22 of corresponding pairs of wings 21.

In use, during the assembly of the indicator device 2, the hand 5 is inserted into the lid 4 through the slot 25 and rotated to reach a position in which the portion 10 of the hand 5 rests on the end 29 of the side portion 27 and the appendix 17 defines a side contrast for an internal surface 33 of the side wall 24 of the lid 4. In this position, the side portion 27 is engaged by the portion 10 of the hand 5.

The hand 5 is further rotated so as to make the wings 21 cooperate with the ribs 32 of the lid 4. Specifically, when the wings 21 are arranged in contact with the internal surface 31 of the bottom wall 23, each rib 32 engages the notches 22 of two wings 21; the hand 5 engages the central portion 26 of the slot 25; the lid 4 is arranged on the hand 5 in a position transversal to the rotation axis 7; the appendix 18 is arranged in contact with the internal surface 33 of the side wall 24; and the end segment 19 of the portion 11 is snappingly engaged into the side portion 28. The hand 5 engages, at this point, all the portions of the slot 25 and the lid 4 is locked on the hand 5 in a position coaxial to the rotation axis 7.

The lid 4 is formed by an elastically deformable material, so that by applying a pressure to the side wall 24, it is possible to release the portion 28 of the slot 25 from the portion 11 of the hand 5 and pull out the hand 5 itself through the slot 25.

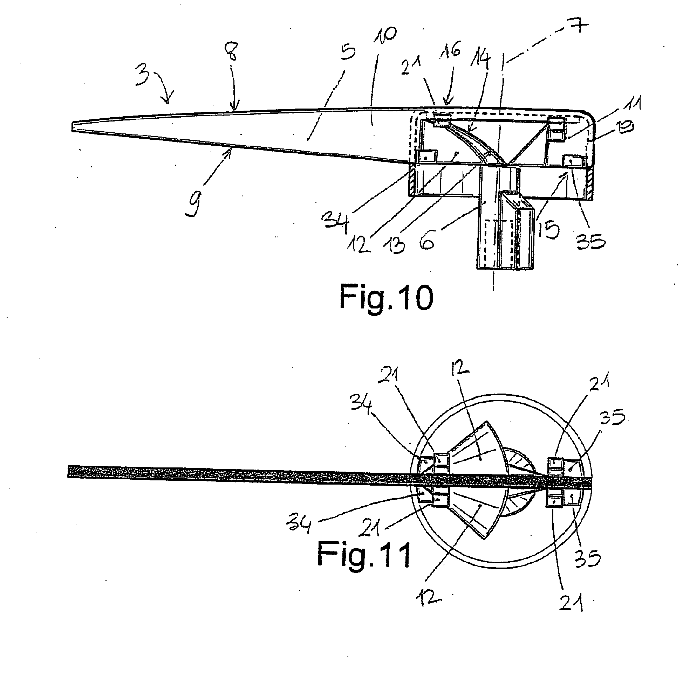

The embodiment of the on-board instrument 1 shown in figures 10 and 11 is similar to that shown in figures from 1 to 9, and the corresponding parts of the two embodiments are marked with the same reference numbers, where possible.

The embodiment of the on-board instrument 1 shown in figures 10 and 11 differs from that shown in figures from 1 to 9 in that the pointer 3 in figures 10 and 11 comprises a centring device 15, which comprises, in turn, two appendixes 34 and two appendixes 35, wherein the two appendixes 35 are arranged reciprocally opposed and aligned on opposite sides of the hand 5 and extend from corresponding side surfaces of the hand 5, at the edge 9, in a direction transversal to the rotation axis 7 and specifically extend from the portion 11, are arranged near the free end of the portion 11 and identify on the same an end segment 19 arranged outside the appendixes 35 and joined to the appendixes 35 by means of a shoulder 20. The appendixes 34 instead extend from corresponding reflecting surfaces 13 of the prisms 12, at the edge 9 of the hand 5 in a direction transversal to the rotation axis 7. The distance between the external surfaces of the appendixes 34 and the appendixes 35 rounds down the internal diameter of the side wall 24 of the lid 4.

In use, during the assembly of the indicator device 2, the hand 5 is inserted into the lid 4 through the slot 25 and rotated to reach a position in which the portion 10 of the hand 5 rests on the end 29 of the side portion 27 and the appendixes 34 define a side contrast for the internal surface 33 of the side wall 24 of the lid 4. Subsequently, the appendixes 35 are arranged in contact with the internal surface 33 of the side wall 24 defining a contrast for the side wall 24 itself and the end segment 19 of the portion 11 is snappingly engaged into the side portion 28; in this manner, the external structure of the on-board instrument 1 and the assembly method of the indicator device 2 remain unchanged.

## Claims

1. An on-board instrument indicator device (1), the indicator device (2) comprising:
a pointer (3) in turn comprising a hand (5) having a determined thickness and a pin (6) supporting the hand (5) and turnable about an axis (7); the hand (5) being provided with reflecting prisms (12) for directing a differently oriented light beam along the hand (5); and
a cup-shaped lid (4) for covering the prisms (12); the lid (4) having a side wall (24) and a bottom wall (23) and being provided with a slot (25) engaged by a portion of the hand (5) carrying said prisms (12);
wherein the slot (25) comprises a central portion (26) obtained through the bottom wall (23), and a first and a second side portions (27, 28) obtained in the side wall (24) and communicating with corresponding ends of the central portion (26); the first side portion (27) having an end (29) serving as a rest for the hand (5); and the hand (5) being snappingly coupled to the second side portion (28) to lock the lid (4) on the hand (5) in a position coaxial to said axis (7);
wherein the slot (25) has a width rounding up the thickness of the hand (5); the hand (5) having side wings (21) adapted to cooperate with an internal surface (31) of the bottom wall (23) to position the hand (5) itself in a position transversal to the said axis (7) and engaging with the slot (25); **characterised in that**
the bottom wall (23) is provided with two ribs (32) protruding inward from the bottom wall (23) itself ad arranged on opposite sides of the central portion (26) of the slot (25); each said side wing (21) having a slot (22) engaged by a corresponding said rib (32).

2. A device according to claim 1, wherein the lid (4) is formed by an elastically deformable material.

3. A device according to any one of the preceding claims, wherein the hand (5) comprises a first and a second portions (10, 11) arranged on opposite sides of said axis (7) and engaging the first side portion (27) and the second side portion (28) of the slot (25), respectively; the second portion (11) of the hand (5) snappingly engaging the second side portion (28) of the slot (25).

4. A device according to claim 3, wherein the hand (5) has, on the side facing the pin (6), centring means (17, 18, 34, 35) cooperating with an internal surface (33) of the side wall (24) of the lid (4) to fix the lid (4) itself in a position coaxial to said axis (7); the second portion (11) of the hand (5) having an end segment (19) protruding outwards from the centring means (17, 18, 34, 35) and snappingly engaged into said second side portion (28).

5. A device according to claim 4, wherein said end segment (19) has a length essentially equal to a thickness of the side wall (24) of the lid (4).

6. A device according to claim 4 or 5, wherein the centring means (17, 18) comprise two appendixes (17, 18) protruding from the hand (5) towards the pin (6) and arranged in specular positions with respect to said axis (7).

7. A device according to claim 4 or 5, wherein the centring means (34, 35) comprise two pairs of appendixes (34, 35) protruding from the hand (5) in a direction transversal to the rotation axis (7) and arranged in specular positions with respect to said axis (7).

8. A device according to any one of the preceding claims, wherein the hand (5) is shaped as a flat plate having said thickness and laterally delimited by a first and a second essentially rectilinear edges (8, 9), which are perpendicular to said axis (7), and are arranged at a reciprocal distance, measured parallel to the said axis (7), essentially equal to a length of the side portions (27, 28) of the slot (25).

9. A device according to any one of the preceding claims, wherein the hand (5) has a cavity (14) delimited by said prisms (12).

10. An on-board instrument (1) comprising an indicator device (2) according to any one of the preceding claims.

## Patentansprüche

1. Bordinstrument-Zeigervorrichtung (1), welche Zeigervorrichtung (2) enthält:
einen Zeiger (3), der wiederum einen Zeigerarm (5) mit einer vorbestimmten Dicke und eine den Zeigerarm (5) tragende, um eine Achse (7) drehbare Achse (6) aufweist; wobei der Zeigerarm (5) mit reflektierenden Prismen (12) versehen ist, um einen anders ausgerichteten Lichtstrahl entlang dem Zeigerarm (5) zu leiten; und
einen becherförmigen Deckel (4) zum Abdecken des Prismas (12); welcher Deckel (4) eine Seitenwand (24) und einen Boden (23) hat und mit einem Schlitz (25) versehen ist, in welchen ein Teil des Zeigerarms (5) eingreift, der das Prisma (12) trägt;
wobei der Schlitz (21) einen Mittelabschnitt (26), der durch den Boden (23) erhalten wird, und einen ersten und einen zweiten Seitenabschnitt (27, 28) aufweist, die in der Seitenwand (24) erhalten werden und mit entsprechenden Enden des Mittelabschnitts (26) in Verbindung stehen; wobei der erste Seitenabschnitt (27) ein Ende (29) hat, welches als eine Anlage für den Zeigerarm (5) dient; und wobei der Zeigerarm (5) mit dem zweiten Seitenabschnitt (28) durch eine Rastverbindung verbunden ist, um den Deckel (4) an dem Zeigerarm (5) in einer zu der Achse (7) koaxialen Position zu verrasten;
wobei der Schlitz (25) eine die Dicke des Zeigerarms (5) umfassende Breite hat; der Zeigerarm (5) Seitenwangen (21) hat, die dafür ausgelegt sind, in Zusammenwirkung mit einer Innenfläche (31) des Bodens (23) den Zeigerarm (5) selbst in einer Position quer zu der Achse (7) und in Eingriff mit dem Schlitz (25) zu positionieren; **dadurch gekennzeichnet, dass**
der Boden (23) mit zwei Rippen (32) versehen ist, die vom Boden (23) selbst nach innen vorspringen und an entgegengesetzten Seiten des Mittelabschnitts (26) des Schlitzes (25) angeordnet sind; wobei jede Seitenwange (21) einen Schlitz (22) hat, in den eine entsprechende Rippe (32) eingreift.

2. Vorrichtung nach Anspruch 1, bei welcher der Deckel (4) aus einem elastisch verformbaren Material gebildet ist.

3. Vorrichtung nach einem der vorstehenden Ansprüche, bei welcher der Zeigerarm (5) einen ersten und einen zweiten Abschnitt (10, 11) aufweist, die an gegenüberliegenden Seiten der Achse (7) angeordnet sind und mit dem ersten Seitenabschnitt (27) bzw. dem zweiten Seitenabschnitt (28) des Schlitzes (25) in Eingriff stehen; wobei der zweite Abschnitt (11) des Zeigerarms (5) in Rasteingriff mit dem zweiten Seitenabschnitt (28) des Schlitzes (25) steht.

4. Vorrichtung nach Anspruch 3, bei welcher der Zeigerarm (5) auf der zu der Achse (6) weisenden Seite eine Zentriereinrichtung (17, 18, 34, 35) aufweist, die mit einer Innenfläche (33) der Seitenwand (24) des Deckels (4) zusammenwirkt, um den Deckel (4) selbst in einer zu der Achse (7) koaxialen Position zu befestigen; der zweite Abschnitt (11) des Zeigerarms (5) ein Endsegment (19) hat, das von der Zentriereinrichtung (17, 18, 34, 35) nach außen vorspringt und in Rasteingriff mit dem zweiten Seitenabschnitt (28) steht.

5. Vorrichtung nach Anspruch 4, bei welcher die Länge des Endsegments (19) im Wesentlichen gleich der Dicke der Seitenwand (24) des Deckels (4) ist.

6. Vorrichtung nach Anspruch 4 oder 5, bei welcher die Zentriereinrichtung (17, 18) zwei von dem Zeigerarm (5) zu der Achse (6) vorspringende Fortsätze (17, 18) umfasst, die relativ zu der Achse (7) in spiegelbildlichen Positionen angeordnet sind.

7. Vorrichtung nach Anspruch 4 oder 5, bei welcher die Zentriereinrichtung (34, 35) zwei Paare von Fortsätzen (34, 35) umfasst, die von dem Zeigerarm in eine Richtung quer zu der Drehachse (7) vorspringen und in spiegelbildlichen Positionen relativ zu der Achse (7) angeordnet sind.

8. Vorrichtung nach einem der vorstehenden Ansprüche, bei welcher der Zeigerarm (5) als flache Platte mit der Dicke geformt ist und seitlich durch einen ersten und einen zweiten im wesentlichen geradlinigen Rand (8, 9) begrenzt wird, welche zu der Achse (7) senkrecht sind und in einem parallel zur der Achse (7) gemessenen beidseitigen Abstand angeordnet sind, der im wesentlichen gleich einer Länge der Seitenabschnitte (27, 28) des Schlitzes (25) ist.

9. Vorrichtung nach einem der vorstehenden Ansprüche, bei welcher der Zeigerarm (5) einen von den Prismen (12) begrenzten Hohlraum (14) hat.

10. Bordinstrument (1), enthaltend eine Zeigervorrichtung (2) nach einem der vorstehenden Ansprüche.

## Revendications

1. Dispositif indicateur pour instrument de bord (1),
le dispositif indicateur (2) comprenant :
un pointeur (3) qui comprend à son tour une aiguille (5) ayant une épaisseur déterminée et un pivot (6) supportant l'aiguille (5) et pouvant tourner autour d'un axe (7) ; l'aiguille (5) étant munie d'un prisme réfléchissant (12) destiné à projeter un faisceau lumineux orienté différemment le long de l'aiguille (5) ; et
un couvercle (4) en forme de godet destiné à couvrir le prisme (12) ; le couvercle (4) ayant une paroi latérale (24) et une paroi de fond (23) et étant muni d'une fente (25) avec laquelle coopère une partie de l'aiguille (5) portant ledit prisme (12) :
dans lequel la fente (25) comprend une partie centrale (26) obtenue à travers la paroi de fond (23), et des première et seconde parties latérales (27, 28) obtenues dans la paroi latérale (24) et communiquant avec des extrémités correspondantes de la partie centrale (26) ; la première partie latérale (27) ayant une extrémité (29) qui sert d'appui pour l'aiguille (5) ; et l'aiguille (5) étant accouplée par encliquetage à la seconde partie latérale (28) pour verrouiller le couvercle (4) sur l'aiguille (5) dans une position coaxiale audit axe (7) ;
dans lequel la fente (25) a une largeur à peu près égale à l'épaisseur de l'aiguille (5) ; l'aiguille (5) ayant des ailettes latérales (21) adaptées pour coopérer avec une surface interne (31) de la paroi de fond (23) pour positionner l'aiguille (5) elle-même dans une position transversale audit axe (7) et coopérant avec la fente (25) ; **caractérisé en ce que** la paroi de fond (23) est munie de deux nervures (32) faisant saillie vers l'intérieur à partir de la paroi de fond (23) elle-même et disposées sur des côtés opposés de la partie centrale (26) de la fente (25) ; chacune desdites ailettes latérales (21) ayant une fente (22) avec laquelle la nervure (32) correspondante coopère.

2. Dispositif selon la revendication 1, dans lequel le couvercle (4) est formé d'une matière élastiquement déformable.

3. Dispositif selon une quelconque des revendications précédentes, dans lequel l'aiguille comprend des première et seconde parties (10, 11) disposées sur des côtés opposés dudit axe (7) et qui coopèrent avec la première partie latérale (27) et avec la seconde partie latérale (28) de la fente (25), respectivement ; la seconde partie (11) de l'aiguille (5) coopérant par encliquetage avec la seconde partie latérale (28) de la fente (25).

4. Dispositif selon la revendication 3, dans lequel l'aiguille (5) présente, sur le côté en regard du pivot (6), des moyens de centrage (17, 18, 34, 35) qui coopèrent avec une surface interne (33) de la paroi latérale (24) du couvercle (4) pour fixer le couvercle (4) lui-même dans une position coaxiale audit axe (7) ; la seconde partie (11) de l'aiguille (5) ayant un segment terminal (19) qui fait saillie vers l'extérieur à partir des moyens de centrage (17, 18, 34, 35) et qui est engagé avec encliquetage dans ladite seconde partie latérale (28).

5. Dispositif selon la revendication 4, dans lequel ledit segment terminal (19) a une longueur sensiblement égale à une épaisseur de la paroi latérale (24) du couvercle (4).

6. Dispositif selon la revendication 4 ou 5, dans lequel les moyens de centrage (17, 18) comprennent deux appendices (17, 18) faisant saillie à partir de l'aiguille (5) en direction du pivot (6) et disposés dans des positions spéculaires par rapport audit axe (7).

7. Dispositif selon la revendication 4 ou 5, dans lequel les moyens de centrage (34, 35) comprennent deux paires d'appendices (34, 35) faisant saillie à partir de l'aiguille (5) dans une direction transversale à l'axe de rotation (7) et disposés dans des positions spéculaires par rapport audit axe (7).

8. Dispositif selon une quelconque des revendications précédentes, dans lequel l'aiguille (5) est conformée comme une plaque plate ayant ladite épaisseur et délimitée latéralement par des première et seconde arêtes sensiblement rectilignes (8, 9), qui sont perpendiculaires audit axe (7) et sont disposées à une distance mutuelle, mesurée parallèlement audit axe (7), sensiblement égale à une longueur des parties latérales (27, 28) de la fente (25).

9. Dispositif selon une quelconque des revendications précédentes, dans lequel l'aiguille (5) a une cavité (14) délimitée par lesdits prismes (12).

10. Instrument de bord (1) comprenant un dispositif indicateur (2) selon une quelconque des revendications précédentes.
